Europäisches Patentamt

European Patent Office

Office européen des brevets

(19)

(11) Publication number: **0 114 093**

**B1**

(12)                          **EUROPEAN PATENT SPECIFICATION**

(45) Date of publication of patent specification: **30.12.86**     (51) Int. Cl.⁴: **G 06 K 11/06**

(21) Application number: **84300094.4**

(22) Date of filing: **06.01.84**

(54) **An eraser for an electronic blackboard.**

(30) Priority: **08.01.83 JP 482/83 u**

(43) Date of publication of application:
**25.07.84 Bulletin 84/30**

(45) Publication of the grant of the patent:
**30.12.86 Bulletin 86/52**

(84) Designated Contracting States:
**DE FR GB IT NL**

(56) References cited:
**EP-A-0 021 928**
**FR-A-2 248 558**
**US-A-3 758 717**
**US-A-4 367 465**

(73) Proprietor: **FUJITSU LIMITED**
**1015, Kamikodanaka Nakahara-ku**
**Kawasaki-shi Kanagawa 211 (JP)**

(72) Inventor: **Enokido, Shunji c/o FUJITSU LIMITED**
**Patent Department 1015 Kamikodanaka**
**Nakahara-ku**
**Kawasaki-shi Kanagawa 211 (JP)**
Inventor: **Kodani, Hideyuki c/o FUJITSU**
**LIMITED**
**Patent Department 1015 Kamikodanaka**
**Nakahara-ku**
**Kawasaki-shi Kanagawa 211 (JP)**
Inventor: **Ohta, Hajime c/o FUJITSU LIMITED**
**Patent Department 1015 Kamikodanaka**
**Nakahara-ku**
**Kawasaki-shi Kanagawa 211 (JP)**

(74) Representative: **Sunderland, James Harry et al**
**HASELTINE LAKE & CO Hazlitt House**
**28 Southampton Buildings Chancery Lane**
**London WC2A 1AT (GB)**

# Description

This invention relates to an eraser for an electronic blackboard.

An electronic blackboard is a device developed for displaying a signal, written by hand on an input board by means of a hand-held input instrument, on an electronic display unit. It has been proposed to use such blackboards in conference systems established by interconnecting isolated conference rooms by telephone lines etc. Such systems are beginning to be put into practical use, and for example are known under the trade name "Gemini 100" (produced by AT&T) or under the trade name "OA Board" (produced by Fujitsu Ltd.).

The principle behind an electronic blackboard is the detection of positional coordinates of a hand-held input instrument, such as a chalk, pencil, felt pen or some special input instrument, when it contacts the surface of an input board (such an input board is sometimes called a digitiser). The coordinates of the touched points are detected and memorised or transmitted to a display unit, and the trace of touched points (figures) are displayed on the display unit.

Electronic blackboard systems can be roughly classified into two types on the basis of methods of detecting the coordinates of touched points. One type is a pressure sensing type, which detects the contact point of a hand-held instrument on an input board by using a pressure sensitive board. The other type is an electro-magnetic type, which can be further sub-divided into electric and magnetic types, according to whether coordinate detection is effected by electric or magnetic coupling of the detector to the electronic blackboard.

Electro-magnetic detection systems can be further classified into two kinds. One kind is an active board and passive pen type system: that is, a position signal is generated by the input board (active board) and is detected by pen or eraser (passive pen). The other kind is a passive board and active pen type system: that is, the pen or eraser generates a signal (active pen) and its position is detected by the input board (passive board).

The present invention is concerned with an eraser used for erasing a part or parts of a figure written on the surface of the input board, and for blanking memories corresponding to the erased part of the figure, in order to erase the corresponding part of the figure displayed on a display unit.

The following explanation will be given with respect to a magnetic type electronic blackboard, and especially with respect to an active board and passive pen type system. However, it will be understood that the present invention can be applied to any other type of electronic blackboard system regardless of the method used for detecting the positional coordinates of an input instrument or eraser on the surface of the input board.

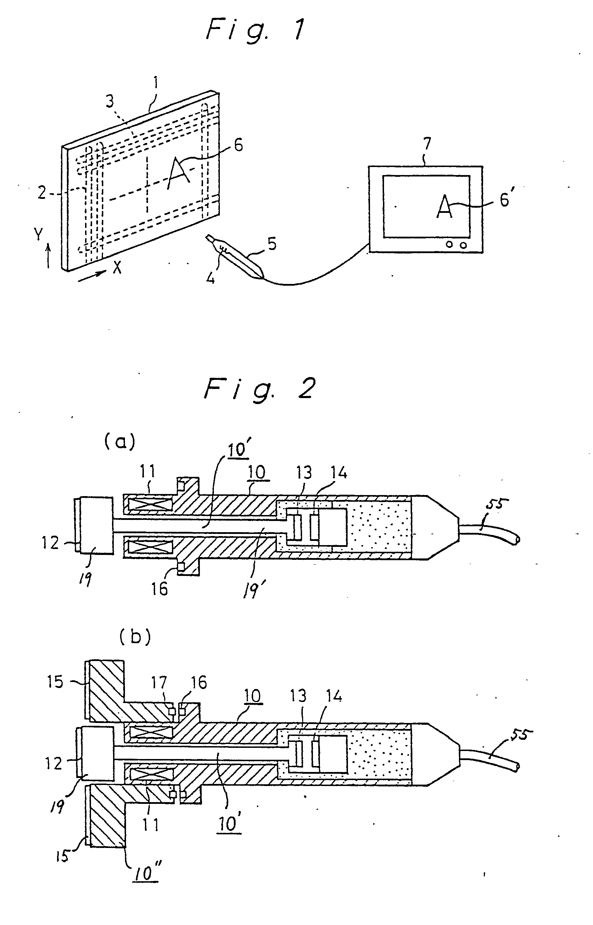

Main parts of a magnetic type electronic blackboard system are shown in Fig. 1, which is a schematic diagram. In a blackboard (tabulator of figures written on input board) 1 there are installed a number of coils arranged in X and Y directions with spacings depending upon the resolution to be provided. They are fabricated usually by printed circuit technology and are called X-coils 2 and Y-coils 3 respectively, according to their directions of arrangement as shown in Figure 1. These X-coils and Y-coils are excited one by one with electric current and magnetised for specified intervals in order in X and Y directions. When a figure or letter 6 is written on the board 1 (not necessarily black) by a felt pen 5, a detection coil 4 installed in the felt pen 5 detects the magnetic field on the surface of the board. From the timing or phase of the magnetic field detected by the coil 4, the positional coordinate of the felt pen 5 on the board 1 is detected. A figure 6', similar to figure 6 written on the board 1, can be shown on a display unit 7.

An eraser for such system is generally similar to an input pen. When the figure on the input board is erased by hand with an eraser having a felt point for example, a detection coil installed in the eraser detects the magnetic field of the input board. The positional coordinate of the eraser is detected in the same way as for the input pen, and the memory corresponding to the trace of points contacted by the eraser on the surface of the input board (that is the part of the figure erased by the eraser) are blanked. Thus the corresponding part of figure on the display unit is erased.

With a previous electronic blackboard, the user has experienced some inconvenience with regard to erasing figures. Because the point of the eraser is of fixed size, if the user wished to erase a large area, he had to use the eraser vigorously. On the other hand, if the user wished to erase a fine or sharp part of a figure, the unwanted part had to be erased by an inappropriately large eraser. If the user tried to erase a fine or sharp part of a figure by tilting the eraser so as to use only an edge of the eraser, as one does when using an ordinary blackboard eraser, errors occurs in positional detection and the displayed figure was deleted incorrectly.

A simple method of dealing with this problem would be to provide two erasers, one large and one small. However, this increases the number of components and cost. Further, inconvenience due to the need to change the eraser in hand is suffered.

According to the present invention there is provided an electronic blackboard eraser, for an electronic blackboard system, for erasing information written on an input board of the system and at the same time providing signals for enabling erasure of corresponding information displayed on and/or stored electronically in a display unit of the system, the eraser comprising:

a main unit, adapted to be held by hand, operable to send an erasing signal for enabling erasure of displayed and/or stored information;

position detecting means provided in the main unit for detecting or sending signals indicating positional coordinates of the eraser with respect to the input board;

a first erasing unit, attached to the main unit, comprising a first eraser portion operable to erase a first area of information written on the input board;

first sensor means, provided in the main unit operable to detect when the first eraser portion is brought into contact with the input board, to generate a signal indicating that the eraser is in use;

characterised in that the eraser further comprises:

a second erasing unit, detachably engageable with main unit and comprising a second eraser portion operable in combination with said first eraser portion to erase a second area of information written on the input board; and

second sensor means provided in the main unit and/or in the second erasing unit, operable to detect when the second erasing portion is attached to the main unit and to generate a signal indicating that the second erasing portion is in use.

An embodiment of the present invention can avoid the above-mentioned inconvenience and can provide a new type of eraser for an electronic blackboard which offers a changeable size of erasing area, so as to be usable for example for erasing large or small areas of a figure.

An embodiment of the present invention can provide an eraser for an electronic blackboard which is convenient for practical use.

In an embodiment of the present invention a detachable large area eraser, for erasing large areas, is provided at the top of a fine area eraser, and means are provided to detect whether or not the large area eraser is in use. By such detection, the area to be deleted on the display unit can be controlled.

An eraser embodying the present invention comprises a main unit, a small area erasing unit attached to the main unit, a position sensor installed in the main unit, and a large area erasing unit.

A sensor for detecting whether the large area eraser unit is attached or not comprises, for example, a reed relay, which is switched by the magnetic field of a permanent magnet installed in the large area eraser unit.

Reference is made, by way of example, to the accompanying drawings, in which:—

Fig. 1 is a schematic diagram illustrating parts of a magnetic type electronic blackboard system,

Fig. 2(a) is a schematic cross-sectional view of an eraser embodying the present invention for an electronic blackboard, when a large area erasing unit is not attached thereto;

Fig. 2(b) is a schematic cross-sectional view of the eraser of Fig. 2(a) when a large area erasing unit is attached thereto;

Fig. 3 is a schematic cross-sectional view of another embodiment of the present invention;

Fig. 4 is a more detailed cross-sectional view of still another embodiment of the present invention; and

Fig. 5 shows a schematic block diagram of a controller system of an electronic blackboard.

As mentioned above, two kinds of erasers are required for the convenience of the user for erasing a figure written on an electronic blackboard, one for erasing a small area (fine) and another for erasing a large area.

This requirement is met by providing a large eraser attachable to a small (fine) eraser. The basic erasing process is similar to that described above. Namely, the positional coordinate of the centre of the eraser touching the surface of the input board is detected, and memory contents corresponding to the radius of the eraser around its centre are blanked. Thus the part of a figure corresponding to this area on the display unit is erased.

It is necessary to detect whether the large area eraser is in use or not, in order to determine the radius of blanking of memory contents. We carried out trials relating to detection of the size of eraser in use. In one trial a holder was made for the large area eraser, in which the large area eraser was to be kept when not in use. The use of large area eraser is detected by the holder. Namely, if eraser was not in the holder, it was judged to be in use and an appropriate erasing signal was sent to a controller. However, it was troublesome for a user always to have to return the eraser back to the holder. If the user was concentrating elsewhere, he often forgot to return the large eraser to the holder, and this caused problems.

Thus, it is necessary to detect the use of an attachable large area eraser unit by means of the eraser itself. Fig. 2 illustrates the structure of an eraser embodying the present invention. In Fig. 2, (a) illustrates the eraser when the large area eraser unit is not attached, and (b) illustrates the eraser with the large area eraser unit attached.

The eraser comprises a main unit *10*, a small area erasing unit *10'* and a large area erasing unit *10"*. These are made from non-magnetic material. It is preferable to use a light material, such as plastics, to reduce weight and to make handling easy. The materials used are similar for all the embodiments of the present invention described hereinafter.

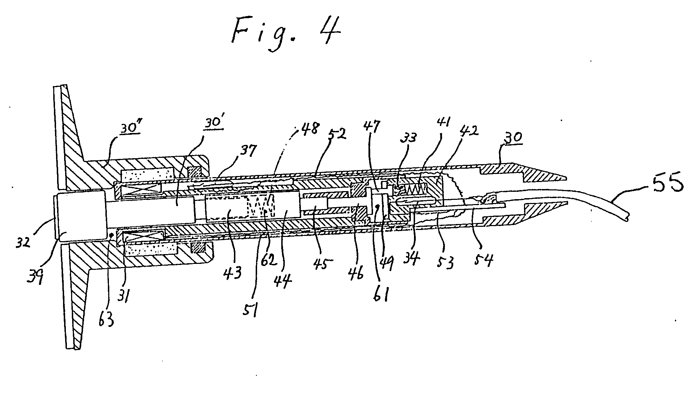

The main unit *10* (hand held rod) is adapted to be hand held and is generally cylindrical. It is provided with a detection coil 11 and contact points 13 and 14. These contact points are separated from each other by appropriate means which will be explained with reference to Fig. 4.

The small area erasing unit *10'* comprises a small area eraser 12, attached to the surface of an eraser head 19 and supported by a rod 19', which is inserted into the main unit *10*, and held in such a manner as to be able to slide along its axis. Of course, it is held by appropriate means so as not to slip out of the main unit *10*, but this mechanism is not an essential concern of the invention and is not described herein.

The large area erasing unit *10"* is detachably fitted to the main unit *10* as seen in Fig. 2(b). A large area eraser 15 is attached to the surface of large area erasing unit *10"*, as shown in the Fig. 2(b).

The small area eraser 12 and the large area eraser 15 are made of felt or rubber, for example, and used to erase figures written on the surface of the electronic blackboard (not shown). The size and material of the erasers 12 and 15 depend on the kind of material used to write figures on the electronic blackboard, and the size and/or accuracy of figures to be erased. The shape of an eraser may be freely selected, but is preferably circular, for reasons explained hereinafter.

The contact points 13 and 14 come into contact as a result of pressure transmitted by rod 19' attached to the small eraser unit *10'* when the eraser unit is brought to touch the surface of the blackboard and an erasing signal is consequently sent to a control unit or display unit.

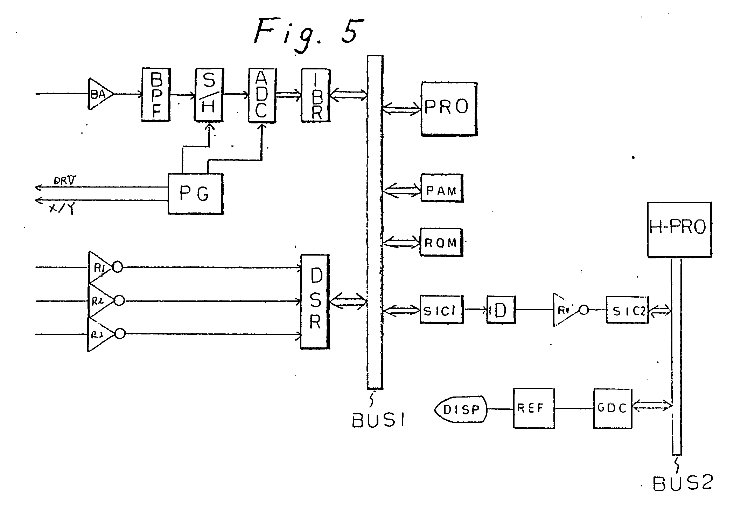

Further contact points 16 and 17 are provided on the main unit *10* and the large area erasing unit *10"*, respectively. as can be seen in Fig. 2(b). These points are brought into mutual contact, to send a signal, when the large area erasing unit 15 is attached to the main unit *10*. Control of the electronic blackboard by these signals will be described hereinafter with reference to Fig. 5. Wiring of the contact points is omitted from Fig. 2 for the sake of clarity. Only a cable 55, for connecting the eraser to a controller unit of the system or display unit, is shown.

It is preferable to make one or both of the contact points 16 or 17 in a rig or ring form, in order that they can contact one another regardless of the rotational orientation around the main unit with which the large area erasing unit is attached to the main unit. If the contact points 16 and 17 are actual point contacts, it is necessary to provide guides on both the main unit and the large area erasing unit to determine the direction of insertion of the large area erasing unit.

When the large area erasing unit *10"* is attached to the main unit *10*, the small area eraser 12 projects slightly beyond the surface of the large area eraser 15, as can be seen in Fig. 2(b). When the large area eraser is pressed against the surface of an electronic blackboard, the small area eraser is pushed into the main unit *10* and the surfaces of the erasers come into the same flat plane. The amount by which the large area eraser projects depends on the size of the large area eraser, and the margin of the space between the contact points 13 and 14. More detail will be given with reference to Fig. 4.

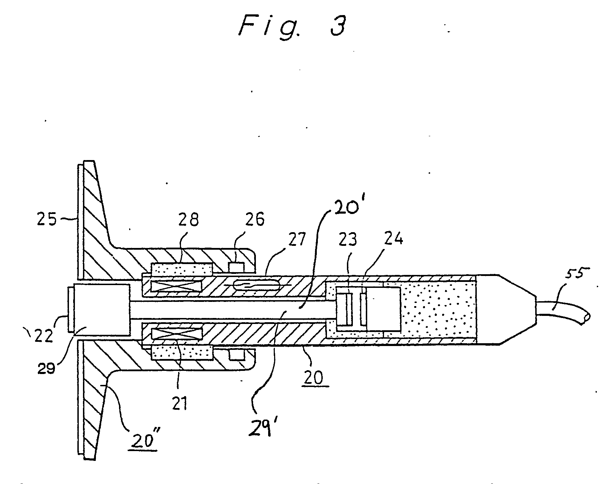

In the eraser as shown in Fig. 2, the contact points 16 and 17 are exposed. This could lead to problems of safety and reliability. An embodiment of the present invention in which this potential problem is avoided is shown in Fig. 3.

Fig. 3 is a cross-sectional view illustrating the construction of the eraser, which comprises a main unit *20*, a small area erasing unit 20' and a large area erasing unit *20"*.

The main unit contains a coil 21 which is used for detecting positional coordinates, contact points 23 and 24, and a magnetic field sensitive reed (lead) switch 27. Contact points 23 and 24 in the main unit *20* are separated from one another by an appropriate structure. This may be a spring inserted in an appropriate place, more detail of which will be explained with reference to Fig. 4.

The small area erasing unit *20'* comprises a small area eraser 22, attached to the surface of an eraser head 29 and supported by a rod 29', which is inserted into the main unit *20*, and held in a manner similar to that described with reference to Fig. 2.

The large area erasing unit *20"* comprises a large area eraser 25, attached to the surface of the unit, and a permanent ring magnet 26. The large area eraser unit is detachable from the main unit *20*, to which it is engaged by appropriate means. In the eraser of Fig. 3, the large area eraser unit is held to the main unit by the friction of a rubber ring 28, fitted on the inner surface of the large area eraser unit *20"* as shown in the Figure.

The contact point 23 is pushed towards the contact point 24 by the rod 29' when the eraser is pressed onto the surface of a board to erase figures written on it. The contact points 23 and 24 then meet, to send an erasing signal indicating that the eraser is in use.

When the large area eraser unit 20" is attached to the main unit *20*, the reed switch 27 installed in the main unit 20 is closed by the magnetic field of the permanent magnet 26 and a signal indicating that the large area erasing unit is in use is sent to a system controller. In Fig. 3, wiring for the switch 27 is omitted for clarity.

When the system controller receives an erasing signal, it blanks memories corresponding to the area of the small size eraser around the positional coordinate of the main unit *20*, and the figure or part figure corresponding to the area of the small area eraser on a display unit is deleted. If the system controller further receives a signal indicating that the large area eraser is in use, it further blanks memories corresponding to the area of large size eraser around the positional coordinate of the main unit *20*. On the display unit a large area corresponding to the large area eraser is deleted. This corresponds to the area deleted on the surface of electronic blackboard. More detail of this erasing process will be described below with respect to Fig. 5.

The surface ofthe small area eraser 22 projects slightly beyond the surface of the large area eraser 25 as shown in Fig. 3, similarly to Fig. 2. More detail of this projection will be given below with reference to Fig. 4.

In the erasers described above, any eraser shape may be used. However, it is practical to use a circular erasing area. For a circular erasing area, the system controller has only to delete an area within a constant radius, determined by the size of the eraser, around the point detected by the coordinate detecting coil. On the other hand, if a rectangular or other shaped erasing area is used, for example, it is necessary to provide additional means for detecting the direction (orientation) of the eraser on the surface of electronic board, though the shape of the eraser is determined beforehand.

Fig. 4 shows another embodiment of the present invention. The Figure gives more detail of the eraser, but in most respects the eraser is similar to those of Figs. 2 and 3 and therefore, only details and some points of difference from the embodiments of Figs. 2 and 3 will be described.

The eraser comprises a main unit 30, a small area erasing unit 30' and a large area erasing unit 30''. Functions and performance of these units are similar to corresponding units in Figs. 2 and 3.

The contact points used in Figs. 2 and 3 for detecting use of the small area erasing unit are replaced in Fig. 4 by a magnetic sensitive (lead) reed relay 34 and a small permanent magnet 33. In the Figure, wiring for a position detecting coil 31, (lead) reed relays 37 and 34 are shown respectively at 51, 52 and 53. The wiring is led via appropriate through holes or spaces in the main unit 30, and bonded to a small terminal plate 54, and then wired to a multi-conductor cable 55. The terminal plate 54 is fixed properly to the main unit 30, and prevents the fine wires used from breaking or disconnection.

The permanent magnet 33 is urged by a spring 41 towards one far end away from the magnetic sensitive reed relay 34, in a case or housing 42 which accommodates the reed relay 34 and a spring 41. When the small area eraser 32 is brought into contact with the surface of a board (not shown), to erase the figures written on the board, the permanent magnet 33 is pushed nearer towards the reed relay 34 in the case or housing 42, as can be seen in the Figure. This causes the relay 34 to close and send a signal indicating that the eraser is in use.

As can be seen in Fig. 4, the rod of small area erasing unit 30', which corresponds to the rod 19' or 29' in Fig. 2 or 3, is constituted by a plurality of rods or pistons and sleeves, coupled to one another, and slides along the axis of the unit. A piston 43 is inserted into a sleeve 44, and urged towards eraser head 39 by a spring 48. Means for supporting and preventing the piston 43 from sliding out from the sleeve 44 is not shown for the sake of simplicity. The sleeve 44 is connected to rods 45 and 46 successively, to conduct pressure on eraser 32 to the magnet 33, through a pin 47. Means for supporting or holding these parts are omitted for the sake of simplicity.

A gap 61 between the head of rod 46 and a stopper 49 is less than the margin allowed for the spring 41 to be compressed in the holder 42, in order to prevent damage to magnet 33 when urged by the small area eraser 32. A marginal space 62 between the end of the piston 43 and the bottom or face of the sleeve 44 where the spring 48 is inserted, is larger than the gap 61, so that a strong pushing stroke of the eraser head larger than the gap 61 is absorbed by the gap 62. A gap 63 between the back of eraser head 39 and the top of the main unit 30 is made less than the total spacing involved in gaps 61 and 62, so that shock arising if the eraser is roughly brought into contact with something is absorbed and the eraser is protected from damage.

The spring 48 is selected to be stronger than spring 41. When the eraser is touched to a blackboard, therefore, the spring 41 is first compressed and the magnet 33 is moved to activate (close) the relay 34. Further pressure is absorbed as mentioned above. The process and function of the eraser of Fig. 4 are similar to those explained with reference to Fig. 2 or 3.

In the above-described embodiments, position detecting coil 11, 21 or 31 is placed in the main unit 10, 20, or 30 respectively, at a head portion thereof. The coil can alternatively be placed in any other location, for example in the head of small area erasing unit 19, 29 or 39. However, according to the experience of the inventors, there is an optimum distance from the surface of board (more precisely from the X and Y coils). This is a distance at which position detection accuracy is high, and error due to the improper use of the eraser, such as tilting of the eraser, becomes a minimum. Thus, in the cases shown in the Figures, the coordinate detection coils are optimally placed. More detail concerning this placing is disclosed in Japanese Laid Open Patent No. Tokukaisho 56—147280 by T. Kohno, issued on Nov. 16, 1981.

It will now be explained briefly how an electronic blackboard is controlled by a control system with reference to Fig. 5, which is a block diagram of such a control system.

A positional coordinate signal picked up by a coil 11, 21 or 31 as shown in Fig. 2, 3 or 4, is amplified by a buffer amplifier BA, filtered by a bandpass filter BPF, then fed to a sample-hold circuit S/H. The sample-hold circuit S/H sends the signal to an analog digital converter (A/D converter) ADC, in synchronism with the period of a clock pulse generator PG. The A/D converter converts the input signal to a 12 bit signal, and sets it in a 12 bit input buffer register IBR.

On the other hand a signal sent from the contact points 13 and 14, 23 and 24 or switch 34, which indicates that the eraser is in use, is led to a first receiver R1. A signal sent from the contact points 16 and 17, or relay 27 or 37, which indicates that the large area erasing unit is in use, is received by a second receiver R2. The outputs of these receivers are set in a device status register DSR.

A processor PRO reads out the memory of device status register DSR at predetermined intervals (usually at intervals of about 10 msec) according to a processing program stored in read only memory ROM (the capacity of which is about 32K bytes). When a flag is set indicating that the "eraser is in use", the processor PRO reads out the signal in the input buffer register IBR and the signal in the device status register DSR indicating whether or not the large erasing unit is in use, and stores them in a random access memory RAM, having a capacity of about 8K bytes. For the transportation of such data between PRO, DSR, RAM and ROM a first data bus BUS1 is used.

At the same time, the signals are converted into a serial data by a first serial interface controller SIC1, and fed to a second serial interface controller SIC2 via a driver D, and a receiver R4 of a host processor H-PRO.

The second serial interface controller SIC2 converts the input serial signal into a parallel signal and sends it out into a second data bus BUS2.

The host processor H-PRO reads the data on the second data bus BUS2, and recognises the area which is to be erased in the figure displayed on a display unit DISP. Then the host processor H-PRO sends out to the second data bus BUS2 the address corresponding to the area to be erased on a refresh memory REF, for writing in signals "0". The refresh memory stores the figure displaying on the display unit DISP.

The above-mentioned address is made up from an address which corresponds to a circular area having a centre corresponding to the coordinate detected by the coil, and a radius corresponding to the size of the eraser used. Data is sent to the refresh memory REF via a graphic display controller GDC. In the refresh memory, data corresponding to a display is written as "1". Replacing this data by "0" causes displayed data to be erased.

The clock pulse generator PG generates a signal (DRV) to drive the X coils 2 and Y coils 3 of the electronic blackboard 1 shown in the Fig. 1. It also generates a signal X/Y to switch the X coils and Y coils.

The signal from the coil 4 in a write pen 5 (Fig. 1) is also sent to the processor PRO. It is necessary, therefore, to distinguish between write and erase.

For this purpose, a writing pen 5 is provided with a switch, which sends a signal indicating that the writing pen is in use. This signal is led to the device status register DSR via a third receiver R3, and registered in a different bit position in the register DSR. Thus the processor can distinguish write and erase signals.

Above, embodiments of the present invention have been explained with reference to a magnetic type active board and passive pen type electronic blackboard. However, it will be clear, as mentioned before, that embodiments of the present invention can be applied to any type of electronic blackboard perhaps with slight modifications which can easily be made by one skilled in the art. For example, by replacing the X coil, Y coil and detection coil by appropriate electric coupler means, such as condenser plates for instance, it is possible to realise an electrostatic type board. Passive board and active pen or eraser types can also be realised.

Moreover, it will be clear that many variations of the described embodiments are possible. For example, the position sensor and the magnetic sensitive relays may be replaced by other magnetic field sensors, such as Hall effect elements. The relays may be replaced by any suitable detectors, such as photo-detectors and light emitting diodes, for example. Mechanical structure can be altered. For instance the rod may be of any shape, and the illustrated means for holding the large area erasing unit and the small area erasing unit in their proper positions may be replaced by many alternatives. Further, the magnet mounted on the large area erasing unit of Fig. 3 or Fig. 4 need not necessarily be a ring magnet. Moreover, an eraser containing a battery and transmitter, to eliminate the cable 55, for connecting the eraser by a wireless transmission system can be provided.

## Claims

1. An electronic blackboard eraser, for an electronic blackboard system, for erasing information written on an input board (1) of the system and at the same time providing signals for enabling erasure of corresponding information displayed on and/or stored electronically in a display unit (7) of the system, the eraser comprising:
a main unit (10, 20, 30), adapted to be held by hand, operable to send an erasing signal for enabling erasure of displayed and/or stored information;
position detecting means (11, 21, 31) provided in the main unit (10, 20, 30) for detecting or sending signals indicating positional coordinates of the eraser with respect to the input board (1);
a first erasing unit (10', 20', 30'), attached to the main unit (10, 20, 30), comprising a first eraser portion (12, 22, 32) operable to erase a first area of information written on the input board (1);
first sensor means (13, 14, 23, 24, 33, 34), provided in the main unit (10, 20, 30) operable to detect when the first eraser portion (12, 22) is brought into contact with the input board (1), to generate a signal indicating that the eraser is in use;
characterised in that the eraser further comprises:
a second erasing unit (10", 20", 30"), detachably engageable with the main unit (10, 20, 30) and comprising a second eraser portion (15, 25) operable in combination with said first eraser portion (12, 22, 32) to erase a second area of information written on the input board (1); and
second sensor means (16, 17, 26, 27, 37), provided in the main unit (10, 20, 30) and/or in the second erasing unit (10", 20", 30"), operable to detect when the second erasing portion (15, 25) is attached to the main unit (10, 20, 30), and to generate a signal indicating that the second erasing portion (15, 25) is in use.

2. An eraser as claimed in claim 1, wherein the second erasing unit (10", 20", 30") is such that, when engaged with the main unit (10, 20, 30), the second eraser portion (15, 25) surrounds the first eraser portion (12, 22, 32).

3. An eraser as claimed in claim 1 or 2, wherein the first sensor means comprises contact points (13, 14, 23, 24) which contact one another as a result of pressure exerted thereon when the first eraser portion (12, 22) is brought into contact with the surface of the input board (1).

4. An eraser as claimed in claim 1 or 2, wherein the first sensor means comprises a magnetic sensor (34) which is operated by means of a permanent magnet (33) movable as a result of pressure exerted thereon when the first eraser portion (32) is brought into contact with the surface of the input board (1).

5. An eraser as claimed in claim 4, wherein the magnetic sensor (34) is a magnetic sensible relay.

6. An eraser as claimed in any preceding claim, wherein the second sensor means comprises contact points (16, 17), arranged to contact one another when the second erasing unit (10″) is attached to the main unit (1).

7. An eraser as claimed in claim 6, wherein at least one of the contact points (16, 17) of the second sensor means has a ring shape, around the main unit (10) or the second erasing unit (10″).

8. An eraser as claimed in any one of claims 1 to 5, wherein the second sensor means comprises a magnetic sensor (27, 37) in the main unit (20, 30) arranged to be operated by a permanent magnet (26) in the second erasing unit (20″, 30″) when the second erasing unit is attached to the main unit (20, 30).

9. An eraser as claimed in claim 8, wherein the magnetic sensor of the second sensor means is a magnetic sensible relay (27, 37).

10. An eraser as claimed in claim 8 or 9, wherein the permanent magnet (26) of the second sensor means is ring shaped, around the second erasing unit (20″, 30″).

11. An eraser as claimed in any preceding claim, wherein the surface of the first eraser portion (12, 22, 32) of the first erasing unit (10′, 20′, 30′) projects beyond the surface of the second eraser portion (15, 25) of the second erasing unit (20″, 20″, 30″) by a predetermined amount, when the second erasing unit is attached to the main unit (10, 20, 30) and the eraser is not brought into contact with the input board.

12. An eraser as claimed in any preceding claim, wherein the first and second erasing portions (12, 22, 32, 15, 25) provide circular erasing areas, the centres of which coincide with the centre of the position detecting means.

13. An eraser as claimed in any preceding claim, wherein the main unit (10, 20, 30) has a cylindrical form.

14. An eraser as claimed in claim 4 or 9, wherein the, each or a magnetic sensor is a Hall effect device.

15. An eraser as claimed in claim 1, wherein the position detecting means comprises a magnetic sensor (11, 21, 31).

16. An eraser as claimed in claim 15, wherein the magnetic sensor of the position detecting means is a Hall effect device.

17. An eraser as claimed in claim 15, wherein the magnetic sensor of the position detecting means is a coil (11, 21, 31) wound on a head portion of the main unit (10, 20, 30).

18. An eraser as claimed in claim 1, wherein the first or the second sensor is a photo-sensor.

**Patentansprüche**

1. Elektronischer Tafelradierer, für ein elektronisches Tafelsystem, zum Radieren von Information, die auf einer Eingabetafel (1) des Systems geschrieben ist und um gleichzeitig Signale zu liefern, welche das Radieren der entsprechenden Information ermöglichen, die auf einer Anzeigeeinheit (7) des Systems angezeigt und/oder elektronisch gespeichert ist, mit:
   einer Haupteinheit (10, 20, 30), die angepaßt ist, um in der Hand gehalten zu werden, und die betreibbar ist, um ein Radiersignal auszusenden, um das Radieren der angezeigten und/oder gespeicherten Information zu ermöglichen;
   einer Positionserkennungseinrichtung (11, 21, 31), die in der Haupteinheit (10, 20, 30) vorgesehen ist, um Signale zu detektieren oder auszusenden, die Positionskoordinaten des Radierers in Bezug auf die Eingabetafel (1) anzeigen;
   einer ersten Radiereinheit (10′, 20′, 30′), die an der Haupteinheit (10, 20, 30) befestigt ist und einen ersten Radierabschnitt (12, 22, 32) umfaßt, der im Betrieb einen ersten Bereich von Information radieren kann, die auf der Eingabetafel (1) geschrieben ist;
   einer ersten Sensoreinrichtung (13, 14, 23, 24, 33, 34), die in der Haupteinheit (10, 20, 30) vorgesehen und betreibbar ist, um zu detektieren, wenn der erste Radierabschnitt (12, 22) mit der Eingabetafel (1) in Kontakt gebracht wird, um ein Signal zu generieren, welches anzeigt, daß der Radierer in Betrieb ist;
   dadurch gekennzeichnet, daß der Radierer ferner umfaßt:
   eine zweite Radiereinheit (10″, 20″, 30″), die abnehmbar mit der Haupteinheit (10, 20, 30) zum Eingriff gebracht werden kann und einen zweiten Radierabschnitt (15, 25) umfaßt, der in Kombination mit dem ersten Radierabschnitt (12, 22, 32) betreibbar ist, um einen zweiten Bereich von Information zu radieren, der auf der Eingabetafel (1) geschrieben ist; und
   zweite Sensoreinrichtungen (16, 17, 26, 27, 37), die in der Haupteinheit (10, 20, 30) und/oder in der zweiten Radiereinheit (10″, 20″, 30″) vorgesehen sind, und die betreibbar sind, um zu detektieren, wann der zweite Radierabschnitt (15, 25) an der Haupteinheit (10, 20, 30) befestigt ist, und um ein Signal zu erzeugen, welches anzeigt, daß der zweite Radierabschnitt (15, 25) in Benutzung ist.

2. Radierer nach Anspruch 1, bei welchem die zweite Radiereinheit (10″, 20″, 30″) so ist, daß dann, wenn sie mit der Haupteinheit (10, 20, 30) im Eingriff ist, der zweite Radierabschnitt (15, 25) den ersten Radierabschnitt (12, 22, 32) umgibt.

3. Radierer nach Anspruch 1 oder 2, bei welchem die erste Sensoreinrichtung Kontaktpunkte (13, 14, 23, 24) umfaßt, welche einander als Folge eines Druckes, der auf sie ausgeübt wird, wenn der erste Radierabschnitt (12, 22) mit der Oberfläche der Eingabetafel (1) in Kontakt gebracht wird, kontaktieren.

4. Radierer nach Anspruch 1 oder 2, bei welchem die erste Sensoreinrichtung einen magnetischen Sensor (34) umfaßt, der mittels eines Permanentmagneten (33) betrieben wird, welcher als Ergebnis des Druckes bewegbar ist, der auf ihn ausgeübt wird, wenn der erste Radierabschnitt (32) mit der Oberfläche der Eingabetafel (1) in Kontakt gebracht wird.

5. Radierer nach Anspruch 4, bei welchem der magnetische Sensor (34) ein magnetisch empfindliches Relais ist.

6. Radierer nach einem der vorhergehenden Ansprüche, bei welchem die zweiten Sensoreinrichtungen Kontaktpunkte (16, 17) umfassen, die angeordnet sind, um einander zu berühren, wenn die zweite Radiereinheit (10″) an der Haupteinheit (1) befestigt ist.

7. Radierer nach Anspruch 6, bei welchem wenigstens einer der Kontaktpunkte (16, 17) der zweiten Sensoreinrichtung eine Ringform, um die Haupteinheit (10) oder die zweite Radiereinheit (10″) hat.

8. Radierer nach einem der Ansprüche 1 bis 5, bei welchem die zweite Sensoreinrichtung einen Magnetsender (27, 37) in der Haupteinheit (20, 30) umfaßt, der so angeordnet ist, daß er durch einen Permanentmagneten (26) in der zweiten Radiereinheit (20″, 30″) betrieben wird, wenn die zweite Radiereinheit an der Haupteinheit (20, 30) befestigt ist.

9. Radierer nach Anspruch 8, bei welchem der Magnetsensor der zweiten Sensoreinrichtung ein magnetisch empfindliches Relais (27, 37) ist.

10. Radierer nach Anspruch 8 oder 9, bei welchem der Permanentmagnet (26) der genannten zweiten Sensoreinrichtung ringförmig um die zweite Radiereinheit (20″, 30″) ausgebildet ist.

11. Radierer nach einem der vorhergehenden Ansprüche, bei welchem die Oberfläche des ersten Radierabschnitts (12, 22, 32) der ersten Radiereinheit (10′, 20′, 30′) über die Oberfläche des zweiten Radierabschnitts (15, 25) der zweiten Radiereinheit (10″, 20″, 30″) um einen vorbestimmten Betrag vorsteht, wenn die zweite Radiereinheit an der Haupteinheit (10, 20, 30) befestigt ist und der Radierer nicht mit der Eingabetafel in Kontakt gebracht ist.

12. Radierer nach einem der vorhergehenden Ansprüche, bei welchem die ersten und zweiten Radierabschnitte (12, 22, 32, 15, 25) kreisförmige Radierbereiche bilden, deren Zentren mit dem Zentrum der Positionsdetektionseinrichtungen koinzidieren.

13. Radierer nach einem der vorhergehenden Ansprüche, bei welchem die Haupteinheit (10, 20, 30) eine zylindrische Form hat.

14. Radierer nach Anspruch 4 oder 9, bei welchem jeder oder ein magnetischer Sensor eine Hall-Effekt-Vorrichtung ist.

15. Radierer nach Anspruch 1, bei welchem die Positionsdetektionseinrichtung einen magnetischen Sensor (11, 21, 31) umfaßt.

16. Radierer nach Anspruch 15, bei welchem der magnetische Sensor der Positionsdetektionseinrichtung eine Hall-Effekt-Vorrichtung ist.

17. Radierer nach Anspruch 15, bei welchem der magnetische Sensor der Positionsdetektionseinrichtung eine Spule (11, 21, 31) ist, die um einen Kopfabschnitt der Haupteinheit (10, 20, 30) gewickelt ist.

18. Radierer nach Anspruch 1, bei welchem der erste oder zweite Sensor ein Fotosensor ist.

**Revendications**

1. Effaceur de tableau électronique, destiné à un système de tableau électronique, pour effacer des informations écrites sur un panneau d'entrée (1) du système et produisant en même temps des signaux pour permettre l'effacement d'informations correspondantes visualisées et/ou mémoriséesélectroniquement dans une unité de visualisation (7) du système, l'effaceur comportant: une unité principale (10, 20, 30) agencée pour être tenue à la main, ayant pour fonction d'émettre un signal d'effacement pour permettre l'effacement d'informations visualisées et/ou mémorisées; un dispositif de détection de position (11, 21, 31) prévu dans l'unité principale (10, 20, 30) pour détecter ou émettre des signaux indiquant des coordonnées de position de l'effaceur par rapport au panneau d'entrée (1); une première unité d'effacement (10′, 20′, 30′) fixée sur l'unité principale (10, 20, 30), comprenant une première partie d'effaceur (12, 22, 32) ayant pour fonction d'effacer une première surface d'informations écrites sur le panneau d'entrée (1); un premier dispositif capteur (13, 14, 23, 24, 33, 34) prévu dans l'unité principale (10, 20, 30) ayant pour fonction de détecter si la première partie d'effaceur (12, 22) est amenée en contact avec le panneau d'entrée (1) en produisant un signal indiquant que l'effaceur est utilisé; caractérisé en ce que l'effaceur comporte en outre: une seconde unité d'effacement (10″, 20″, 30″) engagée de façon amovible sur l'unité principale (10, 20, 30) et comprenant une seconde partie d'effaceur (15, 25) en combinaison avec ladite première partie d'effaceur (12, 22, 32) ayant pour fonction d'effacer une seconde surface d'informations écrites sur le panneau d'entrée (1); et un second dispositif capteur (16, 17, 26, 27, 37) prévu dans l'unité principale (10, 20, 30) et/ou dans la seconde unité d'effacement (10″, 20″, 30″) ayant pour fonction de détecter si la seconde partie d'effacement (15, 25) est fixée sur l'unité principale (10, 20, 30) et de fournir un signal indiquant que la seconde partie d'effacement (15, 25) est utilisée.

2. Effaceur selon la revendication 1, dans lequel la seconde unité d'effacement (10″, 20″, 30″) est telle que lorsqu'elle est engagée avec l'unité principale (10, 20, 30), la seconde partie d'effaceur (15, 25) entoure la première partie d'effaceur (12, 22, 32).

3. Effaceur selon la revendication 1 ou 2, dans lequel le premier dispositif capteur comporte des points de contact (13, 14, 23, 24) qui viennent en contact l'un sur l'autre sous l'effet d'une pression exercée sur eux quand la première partie d'effaceur (12, 22) est amenée en contact avec la surface du panneau d'entrée (1).

4. Effaceur selon la revendication 1 ou 2, dans lequel le premier dispositif capteur consiste en un capteur magnétique (34) qui est manoeuvré au moyen d'un aimant permanent (33) mobile sous l'effet d'une pression exercée sur lui quand la première partie d'effaceur (32) est amenée en contact avec la surface du panneau d'entrée (1).

5. Effaceur selon la revendication 4, dans lequel le capteur magnétique (34) est un relais sensible magnétiquement.

6. Effaceur selon l'une quelconque des revendications précédentes, dans lequel le second dispositif capteur consiste en des points de contact (16, 17) agencés pour venir en contact entre eux quand la seconde unité d'effacement (10″) est fixée sur l'unité principale (1).

7. Effaceur selon la revendication 6, dans lequel l'un au moins des points de contact (16, 17) du second dispositif capteur à une forme annulaire, autour de l'unité principale (10) ou de la seconde unité d'effacement (10″).

8. Effaceur selon l'une quelconque des revendications 1 à 5, dans lequel le second dispositif capteur consiste en un capteur magnétique (27, 37) dans l'unité principale (20, 30) agencé pour être manoeuvré par un aimant permanent (26) dans la seconde unité d'effacement (20″, 30″) quand la seconde unité d'effacement est fixée sur l'unité principale (20, 30).

9. Effaceur selon la revendication 8, dans lequel le capteur magnétique du second dispositif capteur est un relais sensible magnétiquement (27, 37).

10. Effaceur selon la revendication 8 ou 9, dans lequel l'aimant permanent (26) du second dispositif capteur à une forme annulaire autour de la seconde unité d'effacement (20″, 30″).

11. Effaceur selon l'une quelconque des revendications précédentes, dans lequel la surface de la première partie d'effaceur (12, 22, 32) de la première unité d'effacement (10′, 20′, 30′) fait saillie à la surface de la seconde partie d'effaceur (15, 25) de la seconde unité d'effacement (20″, 20″, 30″) d'une longueur prédéterminée quand la seconde unité d'effacement est fixée sur l'unité principale (10, 20, 30) et que l'effaceur n'est pas amené en contact avec le panneau d'entrée.

12. Effaceur selon l'une quelconque des revendications précédentes dans lequel la première et la seconde parties d'effacement (12, 22, 32, 15, 25) présente des surfaces d'effacement circulaires dont les centres coïncident avec le centre du dispositif de détection de position.

13. Effaceur selon l'une quelconque des revendications précédentes, dans lequel l'unité principale (10, 20, 30) à une forme cylindrique.

14. Effaceur selon la revendication 4 ou 9, dans lequel chacun des capteurs magnétique est un dispositif à effet de Hall.

15. Effaceur selon la revendication 1, dans lequel le dispositif de détection de position consiste en un capteur magnétique (11, 21, 31).

16. Effaceur selon la revendication 15, dans lequel le capteur magnétique du dispositif de détection de position est un dispositif à effet de Hall.

17. Effaceur selon la revendication 15, dans lequel le capteur magnétique du dispositif de détection de position est une bobine (11, 21, 31) bobinées sur une partie de tête de l'unité principale (10, 20, 30).

18. Effaceur selon la revendication 1, dans lequel le premier ou le second capteur est un photo-capteur.

## Fig. 1

## Fig. 2

(a)

(b)

# Fig. 3

# Fig. 4

# Fig. 5